# EUROPÄISCHE PATENTSCHRIFT

(11) **EP 1 912 343 B1**
(45) Veröffentlichungstag und Bekanntmachung des Hinweises auf die Patenterteilung: **26.09.2018**
(21) Anmeldenummer: 07019895.7
(22) Anmeldetag: 11.10.2007
(51) Int. Cl.: H04B 3/54, H04L 12/40

(54) **Parametrierung einer intelligenten Einheit über Spannungsversorgungseinrichtung**
Parameterisation of an intelligent unit via a power supply unit
Paramétrage d'une unité intelligente par l'intermédiaire d'un dispositif d'alimentation de tension

(30) Priorität: 12.10.2006 DE 202006015797 U
(43) Veröffentlichungstag der Anmeldung: 16.04.2008
(73) Patentinhaber: Phoenix Contact GmbH & Co. KG, 32825 Blomberg (DE)
(72) Erfinder: Hagemeier, Willi, D-32816 Schieder-Schwalenberg (DE); Kalhoff, Johannes, D-32825 Blomberg (DE); Knafla, Frank, D-32760 Detmold (DE); Krumsiek, Dietmar, D-31860 Emmerthal (DE); Müller, Martin, D-32676 Lüdge (DE); Konieczny, Frank, D-32657 Lemgo (DE); Puls, Oliver, D-32657 Lemgo (DE)
(74) Vertreter: Blumbach · Zinngrebe Patent- und Rechtsanwälte

(56) Entgegenhaltungen:
- WO-A1-00/51248
- US-A1- 2002 150 249
- US-B1- 6 177 860

## Beschreibung

Die Erfindung betrifft eine Anordnung und Vorrichtungen zur Anpassung wenigstens einer intelligenten Einheit an eine Applikation und/oder einen Einbauort der intelligenten Einheit innerhalb einer Automatisierungsanlage.

Herkömmlicherweise werden insbesondere bei Automatisierungsanlagen, die Netzwerksysteme umfassen, welche einem Standard folgen, Teilnehmer heutzutage über Adressen angesprochen. Hierbei erhalten die Teilnehmer oder Netzwerkkomponenten die notwendigen Adressen in der Regel über Adressenschalter, die beispielsweise auf den entsprechenden Geräten angebracht oder in Steckern zum Anschalten der Teilnehmer integriert sind oder indirekt über eine der Seriennummer zugeordnete Adresse, wie dies beispielsweise beim Ethernet der Fall ist, und dem Herunterladen von entsprechenden Parametern. Insbesondere bei Netzwerksystemen, welche direkt oder indirekt Aufgabenbereiche der Sicherheitstechnik betreffen, reichen diese Informationen jedoch häufig nicht aus, um einen sicheren Applikationsbezug und/oder Ortsbezug innerhalb der Automatisierungsanlage herzustellen. Aus diesem Grund werden sicherheitstechnische Teilnehmer, wie zum Beispiel bestimmte Anlagenkomponenten oder intelligente Einheiten derzeit herkömmlicherweise mit zusätzlichen Adressen oder Konfigurationsmöglichkeiten ausgestattet. Diese Zusätze führen jedoch insbesondere im Austauschfall der Teilnehmer zu weiteren bzw. zusätzlichen Handhabungsnachteilen, wie beispielsweise einer definierten Anweisung für den Austauschfall, sowie zu einem erneuten Prüfen der Applikation vor Ort.

So erfolgt z.B. die Parametrierung einer intelligenten Einheit zur Anpassung dieser an eine bestimmte Applikation oder einen bestimmten Einbauort in einer Automatisierungsanlage über steckbare oder eingebaute Parametrierungsspeicher, die unmittelbar der zu parametrisierenden intelligenten Einheit zugeordnet ist. Hierbei kann der Parametrierungsspeicher z.B. in Form eines lokalen Speichers innerhalb der intelligenten Einheit vorliegen, wobei die speziellen Daten je nach applikationspezifischer Einbindung der intelligenten Einheit zuvor gespeichert werden. Der Speicher, auf welchem die speziellen Daten gespeichert sind kann z.B. auch zumindest zeitweise, bspw. in Form einer CD-ROM der intelligenten Einheit zugeführt werden.

Dies führt zu verteilten Parametrierungen und hohen Aufwendungen im Engeneering bzw. in hohen Herstellungskosten der intelligenten Einheiten selber. Bei jedem Wechsel einer solchen Einheit müssen die Parametrierungsdaten jeweils vorher neu einprogrammiert bzw. eingestellt werden. Ist der Parametrierungsspeicher fest der intelligenten Einheit zugeordnet, muss für jede intelligente Einheit jeweils ein solcher Parametrierungsspeicher vorgehalten werden.

Aus der DE 102 59 391 A1 desselben Anmelders ist ein Verfahren und eine Vorrichtung bekannt, mit welchen insbesondere bei netzwerkfähigen intelligenten Einheiten eine auf der jeweiligen Applikation oder dem jeweiligen Einbauort einer intelligenten Einheit innerhalb einer Automatisierungsanlage basierende Konfiguration oder Parametrierung der intelligenten Einheit zur Gewährleistung einer sicheren und somit einfachen Zuordnung zwischen Applikation und/oder Einbauort der intelligenten Einheit innerhalb der Automatisierungsanlage gegeben ist. Im einzelnen wird gemäß diesem Stand der Technik jeweils einer definierten Applikation oder einem definierten Einbauort für eine intelligente Einheit in einer Automatisierungsanlage eine Konfigurationseinrichtung fest zugeordnet, wobei die Konfigurationseinrichtung fest oder lösbar mit dieser Applikation oder diesem Einbauort verbunden ist. In der Konfigurationseinrichtung werden die entsprechenden Applikations- oder ortbasierten Konfigurationsdaten und/oder Verhaltensbeschreibungsdaten gespeichert, und die gespeicherten Daten können von der Konfigurationseinrichtung an eine Logik zum Verarbeiten von Daten zur Konfiguration und/oder Parametrierung der intelligenten Einheit nach Einbindung dieser intelligenten Einheit zum Ausführen dieser Applikation und/oder an diesem Einbauort übertragen werden. Die DE 102 59 391 A1 ermöglicht somit mittels der Konfigurationseinrichtung erstmalig eine sichere Zuordnung zwischen Einbauort einer solchen intelligenten Einheit und der Kommunikationsverbindung und/oder der Parametrierung der intelligenten Einheit, so dass z.B. auch beim Wechseln einer Einheit bereits durch Auslesen der in der Konfigurationseinrichtung gespeicherten Daten sichergestellt ist, dass eine auszuwechselnde Einheit weiterhin die erwartete Eigenschaft in der entsprechenden Applikation erfüllt, welches insbesondere auf Gebieten der Sicherheitstechnik ein entscheidendes Kriterium darstellt.

Ein weiteres Beispiel einer Anordnung nach dem Stand der Technik ist in der PCT-Anmeldung WO 00/51248 offenbart.

Eine Aufgabe der vorliegenden Erfindung ist es, basierend auf diesem Stand der Technik einen Weg aufzuzeigen, welcher hierauf basierend eine neue und nochmals wesentlich verbesserte Weiterentwicklung darstellt, wobei diesbezüglich der Offenbarungsgehalt der DE 102 59 391 A1 ausdrücklich und vollumfänglich in die Offenbarung der vorliegenden Erfindung durch Inbezugnahme mit einbezogen ist.

Die Aufgabe ist erfindungsgemäß durch eine Anordnung mit den Merkmalen des Anspruchs 1 und mit einer Vorrichtung mit den Merkmalen des Anspruchs 2, 3 oder 4 gegeben.

Weitere vorteilhafte und/oder bevorzugte Ausführungsformen und Weiterbildungen sind Gegenstand der abhängigen Ansprüche.

Die Erfindung schlägt somit eine Anordnung zur Anpassung wenigstens einer intelligenten Einheit (100) an eine Applikation und/oder einen Einbauort der intelligenten Einheit innerhalb einer Automatisierungsanlage vor, wobei die Anordnung eine Spannungsversorgungseinrichtung umfasst, an welche wenigstens eine intelligente Einrichtung zum Betreiben dieser für eine bestimmte Applikation und/oder einen bestimmten Einbauort innerhalb der Anlage anzuschließen ist. Die Anordnung umfasst ferner eine Konfigurationseinrichtung, welche dieser Applikation und/oder diesem Einbauort der wenigstens einen anzuschließenden intelligenten Einheit zugeordnet ist, wobei in der Konfigurationseinrichtung applikations- und/oder ortsbasierte Konfigurationsdaten und/oder Verhaltensbeschreibungsdaten gespeichert sind, die nach Anschluss der intelligenten Einheit von der Konfigurationseinrichtung an eine Logik zum Verarbeiten der Daten zur Konfiguration und/oder Parametrierung dieser intelligenten Einheit zur deren Anpassung übertragen werden. Die Konfigurationseinrichtung ist fest oder lösbar mit der Spannungsversorgungseinrichtung verbunden und die Datenübertragung zwischen der Konfigurationseinrichtung und der Logik erfolgt über die Spannungsversorgungseinrichtung.

Erfindungsgemäß ist hierfür ferner eine Vorrichtung vorgeschlagen, welche eine intelligente Einheit mit zugeordneter Logik zum Verarbeiten von Daten zur Konfiguration und/oder Parametrierung der intelligenten Einheit umfasst, wobei die intelligente Einrichtung einen Spannungsversorgungsanschluss zum Anschließen an eine Spannungsversorgungseinrichtung besitzt und ausgebildet ist Daten von einer Konfigurationseinrichtung zum Speichern von applikations- und/oder ortsbasierten Konfigurationsdaten und/oder Verhaltensbeschreibungsdaten zu empfangen und an die Logik zur Anpassung der intelligenten Einheit an die Applikation und/oder den Einbauort weiter- oder durchzuleiten, wobei die intelligente Einheit und/oder die Logik Mittel zum Auslesen von über den Spannungsversorgungsanschluss empfangenen Daten umfasst.

Erfindungsgemäß ist hierfür ferner eine Vorrichtung vorgeschlagen, die eine Konfigurationseinrichtung umfasst, welche der Applikation und/oder dem Einbauort wenigstens einer an einer Spannungsversorgungseinrichtung innerhalb einer Automatisierungsanlage anzuschließenden intelligenten Einheit zugeordnet ist, wobei in der Konfigurationseinrichtung applikations- und/oder ortsbasierte Konfigurationsdaten und/oder Verhaltensbeschreibungsdaten speicherbar sind, wobei die Konfigurationseinrichtung ausgebildet ist, gespeicherte Daten an eine einer angeschlossenen intelligenten Einheit zugeordnete Logik zum Verarbeiten der Daten zur Konfiguration und/oder Parametrierung dieser intelligenten Einheit zur deren Anpassung zu übertragen. Die Konfigurationseinrichtung ist fest oder lösbar mit der Spannungsversorgungseinrichtung verbindbar und zur Datenübertragung über die Spannungsversorgungseinrichtung ausgebildet.

Erfindungsgemäß ist hierfür ferner eine Vorrichtung vorgeschlagen, die eine Spannungsversorgungseinrichtung umfasst, an welche wenigstens eine intelligente Einrichtung mit einem Spannungsversorgungsanschluss zum Betreiben anschließbar und wenigstens eine Konfigurationseinrichtung fest oder lösbar verbindbar ist, derart, dass nach Anschließen der intelligenten Einheit und bei mit der Spannungsversorgungseinrichtung verbundener Konfigurationseinrichtung eine Datenübertragung zwischen der Konfigurationseinrichtung und der intelligenten Einheit über die Spannungsversorgungseinrichtung erfolgen kann.

In bevorzugter Ausbildung umfasst eine erfindungsgemäße Spannungsversorgungseinrichtung einen Spannungsversorgungsverbinder und die intelligente Einheit einen mit dem Spannungsversorgungsverbinder koppelbaren Spannungsversorgungsanschluss, so dass die Datenübertragung über den Spannungsversorgungsverbinder und den Spannungsversorgungsanschluss erfolgt.

In besonders zweckmäßiger Weiterbildung ist vorgesehen, dass die Konfigurationseinrichtung am oder im Spannungsversorgungsverbinder angeordnet ist. Von Vorteil ist ferner, wenn der Spannungsversorgungsverbinder und der Spannungsversorgungsanschluss anwendungsspezifisch zum Herstellen einer Schraub-, Steck-, optischen und/oder Funkverbindung ausgebildet sind.

In besonders effizienter Ausführung ist ferner vorgesehen, dass die Datenübertragung über einen zur Spannungsversorgung zwischen dem Spannungsversorgungsverbinder und dem Spannungsversorgungsanschluss aufgebauten Spannungsversorgungskanal erfolgt, so dass die Notwendigkeit einer Bereitstellung zusätzlicher Leitungswege zur Datenübertragung entfällt.

In bevorzugter Ausbildung umfasst die Konfigurationseinrichtung ferner Mittel zum Einbetten von zu übertragenden Daten in ein Spannungsversorgungssignal und die intelligente Einheit und/oder die Logik Mittel zum Auslesen von in ein Spannungsversorgungssignal eingebetteten Daten.

In zweckmäßiger Weiterbildung sind mit der Logik Mittel zur Rückübertragung von Daten über einen Spannungsversorgungskanal verbunden und die Konfigurationseinrichtung weist Mittel zum Auslesen von rückübertragenen Daten auf.

Zweckmäßig ist ferner, wenn diese Mittel zur Durchführung eines Datenabgleichs zwischen der Logik und der Konfigurationseinrichtung ausgebildet sind.

Bei bevorzugten Ausführungsformen ist die intelligente Einheit innerhalb eines Netzwerkes eingebunden und/oder die Mittel sind für eine gesicherte Übertragung von Daten zwischen der Konfigurationseinrichtung und der Logik angepasst. Die Logik kann vorteilhafter Weise Teil der intelligenten Einheit selbst oder einer weiteren, mit der intelligenten Einheit in Verbindung stehenden Einheit, insbesondere einer Steuereinheit sein.

Die Spannungsversorgungseinrichtung und der Spannungsversorgungsanschluss der intelligenten Einheit besitzen folglich zweckmäßig komplementär ausgebildete Mittel zum Bereitstellen einer unidirektionalen und/oder bidirektionalen Datenübertragungsverbindung zwischen der Konfigurationseinrichtung und der intelligenten Einheit über die Spannungsversorgung.

Diese Mittel stellen vorteilhafter Weise anwendungsspezifisch eine schraub- und/oder steckbare Verbindung, eine optische und/oder eine Funkverbindung bereit.

Die Erfindung wird nachfolgend detaillierter anhand eines bevorzugten Ausführungsbeispiels unter Bezugnahme auf die beigefügte Zeichnung beschrieben, in welcher

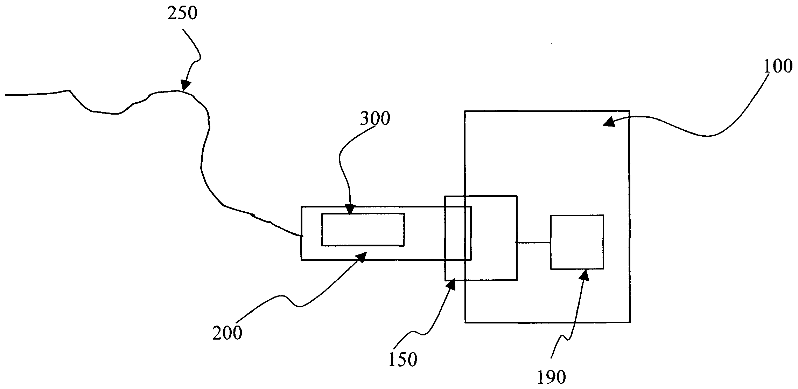

Figur 1 eine stark vereinfachte Prinzipskizze einer intelligenten Einheit zeigt, die als Teilnehmer eines nicht näher dargestellten Netzwerk einer Automatisierungsanlage angeschlossen ist, wobei die intelligente Einheit über eine Konfigurationseinrichtung zur Anpassung der intelligenten Einheit innerhalb des Netzwerkes an eine spezifische Applikation oder einen spezifischen Einbauort mit hierzu notwendigen Daten versorgt wird, welche innerhalb eines Spannungsversorgungssteckers zum elektrischen Anschalten der intelligenten Einheit angeordnet ist.

Die intelligente Einheit 100 ist beim dargestellten Ausführungsbeispiel gemäß Figur 1 als Teilnehmer eines Netzwerkes zum Betreiben für eine definierte Applikation und/oder an definierter Position in einer Automatisierungsanlage ausgebildet und beispielsweise ein netzwerkfähiges Busmodul zum Anschluss von Sensoren und Aktoren. Der Teilnehmer 100 umfasst somit in der Praxis anlagenspezifische Anlagenkomponenten und weist ferner eine zugeordnete Logik zum Verarbeiten von Daten zur Konfiguration und/oder Parametrierung auf, beim Ausführungsbeispiel gemäß Figur 1 eine mit der Bezugsziffer 190 gekennzeichnete Logik. Der dargestellte Teilnehmer 100 wird über eine Spannungsversorgung mit Leistung für die Sensorik und/oder Aktorik bzw. für die anlagenspezifischen Anlagenkomponenten sowie für die Modulversorgung, d.h. im wesentlichen im dargestellten Beispiel die Logik 190 des Teilnehmers 100 versorgt. Die Spannungsversorgung umfasst üblicherweise ein Spannungsversorgungskabel 250 und einen Spannungsversorgungsverbinder 200, der mit einem Spannungsversorgungsanschluss 150 des Teilnehmers 100 verbunden wird. Die Verbindung zur Spannungsversorgung 250, 200 wird im Austauschfall immer vom Teilnehmer 100 getrennt und verbleibt unverlierbar am Einbauort. Diese Unverlierbarkeit resultiert beispielsweise auf der weiterhin bestehenden Verdrahtung.

Nach Tausch des Teilnehmers 100 wird somit die Verbindung zur Spannungsversorgung 250, 200 wieder hergestellt und das ausgetauschte Busmodul wird entsprechend versorgt.

Zur sicheren Adressierung des Teilnehmers 100 und folglich zur Organisation der Kommunikationsverbindung zwischen weiteren im Netzwerk eingebundenen intelligenten Einheiten bzw. Teilnehmern 100 ist dem Applikationsort des Teilnehmers 100 eine in der Figur 1 mit dem Bezugszeichen 300 gekennzeichnete Konfigurationseinrichtung zugeordnet, in welcher entsprechende Applikations- und/oder ortsbasierte Konfigurationsdaten gespeichert sind. In vergleichbarer Weise sind derartige Einrichtungen, welche die für eine jeweilige Applikationen bzw. einen jeweiligen Applikationsort spezifischen Daten umfassen zum anschließen weiterer, beim Ausführungsbeispiel gemäß Figur 1 nicht dargestellter Teilnehmer vorgesehen.

Über die Einrichtung 300 wird insbesondere eine Gerätenummer dem Teilnehmer 100 zugeordnet, wie beispielsweise eine Adresse für die sichere Kommunikation und/oder die Gerätekennung, welches also eine feste Eigenschaft des anzuschaltenden Gerätes bzw. der einzubindenden intelligenten Einheit 100 darstellt. Alternativ oder ergänzend ist über die Konfigurationseinrichtung 300 eine applikationsortspezifische Geräteparametrisierung durchführbar, also im wesentlichen variable Eigenschaften, wie z.B. applikationsortspezifische Daten zur Beschreibung des erwarteten Verhaltens und/oder der Funktion der anzuschaltenden intelligenten Einheit 100 vorgebbar.

Die Einrichtung 300, beinhaltet im vorliegenden Beispiel somit anwendungsspezifisch eine feste oder ladbare Konfiguration, die mittels Hardware, beispielsweise über Schalter oder eine Schaltung und/oder mittels Software den Erfordernissen entsprechend vorgebbar ist.

Die Konfigurationseinrichtung ist gemäß Figur 1 als Teil der zu dem Applikationsort gehörenden Spannungsversorgung 250, 200 bereitgestellt.

Im vorliegenden Beispiel ist Konfigurationseinrichtung in der Verbindungseinheit 200 der Spannungsversorgung angeordnet, an welche der Teilnehmer 100 bei Einbindung in das Netzwerk über den Spannungsversorgungsanschluss 150 angeschlossen wird.

Folglich ist für eine Konfiguration der intelligenten Einheit 100 in Abhängigkeit des Applikationsortes auch bei Austausch eines Teilnehmers 100 ohne zusätzliche Steckelemente, wie z.B. wechselbare Konfigurationsspeicher, gesorgt. Ferner werden mit der Datenübertragung über die Versorgung des Teilnehmers 100 weitere Kontakte oder Steckeinrichtungen, die ansonsten hierfür bisher notwendig wären, eliminiert.

Da die Parametrierungs- und/oder Konfigurationsinformation des Teilnehmers 100 somit über die Spannungsversorgung 250, 200 für den Teilnehmer 100 erfolgt, und die erfindungsgemäß angeordnete Konfigurationseinrichtung 300 stets dem Applikationsort des Teilnehmers 100 zugeordnet ist und alle notwendigen Daten, wie die Adresse, eine Gerätekennung, Daten betreffend die orts- und/oder applikationsbasierte Funktion und/oder Informationen einer Parametrierung bzw. die Parametrierungsdaten und/oder Teile hiervon enthält, werden an den Teilnehmer 100 die zu dessen eigener Parametrierung notwendige Adresse und/oder Parametrierungsinformationen aus der Konfigurationseinrichtung ausgelesen und/oder beispielsweise zum Datenabgleich bevorzugt auch Informationen bzw. Daten an die Konfigurationseinrichtung übertragen.

Im Austausch, d.h. wenn der Teilnehmer 100 ausgetauscht wird, verbleibt die Konfigurationseinrichtung 300 somit am Applikationsort und wird nach Austausch mit dem entsprechend neuen Teilnehmer 100 verbunden. Die ortsgebundenen Kommunikations- und Komponenteneigenschaften werden somit über die Einrichtung 300 mit dem ausgetauschten Teilnehmer ohne zusätzliche Eingriffe auf anwendungspezifische Art und Weise abgeglichen. Eine Konfiguration des ausgewechselten Teilnehmers 100 über zusätzliche Eingriffe, beispielsweise über die Engineering-Umgebung ist somit nicht mehr notwendig. Nach dem erfolgreichen Datenaustausch kann somit der sichere Betrieb automatisch erfolgen, da eine ausgewechselte Komponente weiterhin die erwartete Eigenschaft, insbesondere die gewünschten technischen Merkmale und/oder die Parametrierung der Komponente in der jeweiligen Applikation erfüllt, wobei eine Verbindung zwischen dem Einbauort, der Eigenschaft der Komponente und dem Ansprechen der Komponente gewährleistet bleibt.

Das Speichern und/oder Übertragen dieser Daten erfolgt hierbei in zweckmäßiger Ausführung in gesicherter Form, beispielsweise unter Verwendung eines CRC-Verfahrens. Die Erfindung gewährleistet somit eine ortsgebundene Konfiguration und/oder Parametrierung von intelligenten Einheiten, also im wesentlichen intelligenten System- und/oder Anlagenkomponenten für Sensoren oder Aktoren, welche eine Verarbeitungslogik umfassen oder welchen eine Verarbeitungslogik zugeordnet ist und stellt in Folge die Zuordnung zu einer Applikation und/oder einem definierten Einbauort sicher, welches insbesondere im Umfeld der Sicherheitstechnik einer zu gewährleistenden Anforderung darstellt.

Ein erfindungswesentliches Merkmal ist somit, dass die Konfigurationseinrichtung 300 mit der Spannungsversorgung 250, 200 des Applikationsortes fest oder lösbar verbunden ist, im vorliegenden Beispiel gemäß Figur 1 im Spannungsversorgungsverbinder 200 angeordnet ist, und somit auf der Seite des Einbauortes einer für diesen Applikationsort vorgesehenen intelligenten Einheit 100 integriert ist, so dass bei Verbinden der intelligenten Einheit 100 über den Spannungsversorgungsanschluss 150 der Inhalt der Konfigurationseinrichtung von einem Micro-Controller, wie beispielsweise der Logik 190 ausgelesen wird. Auf Basis dieser Daten wird die intelligente Einheit als Teilnehmer des Netzwerkes, beispielsweise als Feldbusgerät eines Busses parametriert. Erfolgt die Übertragung der Daten über die Spannungsversorgungsleitung selbst, entfallen ferner zusätzliche Kommunikationsleitungen. Die Erfindung ist somit insbesondere geeignet bei der Anpassung von Ethernet-Geräten, die ihre Adressen auf diese Weise von der Konfigurationseinrichtung nach Anschluss der Versorgungsspannung erhalten und einstellen können.

Die Erfindung stellt somit eine nochmalige wesentliche Weiterentwicklung der zugrunde liegenden Anmeldung DE 102 59 391 A1 dar und gewährleistet eine sichere Zuordnung zwischen Einbauort einer intelligenten Einheit und der Kommunikationsverbindung und/oder der Parametrierung, welches eine wesentliche Basis für eine sichere Kommunikation zwischen netzwerkfähigen Einheiten ist.

Darüber hinaus umfasst die Erfindung auch Ausführungsformen, bei denen die Verarbeitungslogik Teil einer weiteren, mit der betreffenden intelligenten Einheit 100 zusammenwirkenden Einheit, wie beispielsweise eine zentrale Steuereinheit ist, so dass also je nach anwendungsspezifischer Ausführungsformen die intelligente Einheit 100 und/oder die Logik entsprechende Mittel zum Auslesen von über den Spannungsversorgungsanschluss 150 der intelligenten Einheit empfangenen Daten umfasst.

Diese Mittel sowie der Verbinder 200 und der Versorgungsanschluss 150 können ferner anwendungsspezifisch eine Schraub-, Steck-, optische und/oder eine Funkverbindung bereitstellen.

In besonders bevorzugter Weiterbildung ist ferner vorgesehen, dass auch die Rückübertragung von Daten, d.h. von der intelligenten Einheit 100 und/oder der dieser Einheit zugeordneten Logik über die Spannungsversorgungsverbindung, insbesondere über den aufgebauten Spannungsversorgungskanal erfolgt und beispielsweise auch ein Datenabgleich zwischen der Logik und der Konfigurationseinrichtung gewährleistet ist.

Umfasst sind ferner Ausführungsformen von der Erfindung, bei denen die Übertragung von Daten über die Spannungsversorgungsverbindung gesichert erfolgt, wobei auch diese gesicherte Datenübertragung unidirektional und/oder bidirektional anwendungsspezifisch erfolgt.

Die erfindungsgemäß bereitgestellte nochmals verbesserte "Plug & Play"-Lösung ist somit wiederum bei im wesentlichen allen Netzwerksystemen einsetzbar und ermöglicht die einfache Anwendung und sichere Adressierung von im wesentlichen in allen Eingabe-/Ausgabeeinheiten, die intelligente Verarbeitungslogik umfassen oder denen eine darartige zugeordnet ist, so dass beispielsweise weitere bevorzugte Anwendungsgebiete auf den Gebieten des Personentransports und der Gebäudeleittechnik liegen.

## Patentansprüche

1. Anordnung zur Anpassung wenigstens einer intelligenten Einheit (100) an eine Applikation und/oder einen Einbauort der intelligenten Einheit innerhalb einer Automatisierungsanlage, wobei die Anordnung eine Spannungsversorgungseinrichtung (200, 250) umfasst, an welche wenigstens eine intelligente Einrichtung (100) zum Betreiben der intelligenten Einheit (100) für eine bestimmte Applikation und/oder einen bestimmten Einbauort innerhalb der Anlage anzuschließen ist, und eine Konfigurationseinrichtung (300) umfasst, welche dieser Applikation und/oder diesem Einbauort der wenigstens einen anzuschließenden intelligenten Einheit (100) zugeordnet ist, wobei in der Konfigurationseinrichtung (300) applikations- und/oder ortsbasierte Konfigurationsdaten und/oder Verhaltensbeschreibungsdaten gespeichert sind, die nach Anschluss der intelligenten Einheit (100) von der Konfigurationseinrichtung an eine Logik (190) zum Verarbeiten der Daten zur Konfiguration und/oder Parametrierung dieser intelligenten Einheit zur deren Anpassung zu übertragen sind,
**dadurch gekennzeichnet, dass**
die Konfigurationseinrichtung (300) fest oder lösbar mit der Spannungsversorgungseinrichtung (200, 250) verbunden ist und die Datenübertragung zwischen der Konfigurationseinrichtung und der Logik (190) über die Spannungsversorgungseinrichtung (200, 250) erfolgt, wobei die von der Konfigurationseinrichtung (300) an die Logik (190) zu übertragenen Daten eine für die intelligente Einheit (100) vorgesehene Gerätenummer, Adresse und/oder Gerätekennung und/oder applikationsspezifische Daten zur Beschreibung des erwarteten Verhaltens und/oder der Funktion der intelligenten Einheit (100) umfassen.

2. Vorrichtung für eine Anordnung nach vorstehendem Anspruch, umfassend
eine intelligente Einheit (100) mit zugeordneter Logik (190) zum Verarbeiten von Daten zur Konfiguration und/oder Parametrierung der intelligenten Einheit, wobei die intelligente Einrichtung einen Spannungsversorgungsanschluss (150) zum Anschließen an eine Spannungsversorgungseinrichtung (200, 250) umfasst, und
wobei die intelligente Einheit (100) ausgebildet ist Daten von einer Konfigurationseinrichtung (300) zum Speichern von applikations- und/oder ortsbasierten Konfigurationsdaten und/oder Verhaltensbeschreibungsdaten zu empfangen und an die Logik (190) zur Anpassung der intelligenten Einheit an die Applikation und/oder den Einbauort weiter- oder durchzuleiten,
**dadurch gekennzeichnet, dass**
die intelligente Einheit (100) und/oder die Logik (190) Mittel zum Auslesen von über den Spannungsversorgungsanschluss (150) empfangenen Daten umfasst,
wobei die empfangenen Daten eine für die intelligente Einheit (100) vorgesehene Gerätenummer, Adresse und/oder Gerätekennung und/oder applikationsspezifische Daten zur Beschreibung des erwarteten Verhaltens und/oder der Funktion der intelligenten Einheit (100) umfassen.

3. Vorrichtung für eine Anordnung nach Anspruch 1 oder für eine Vorrichtung nach Anspruch 2, umfassend eine Konfigurationseinrichtung (300), welche der Applikation und/oder dem Einbauort wenigstens einer an einer Spannungsversorgungseinrichtung (200, 250) innerhalb einer Anlage anzuschließenden intelligenten Einheit (100) zugeordnet ist, wobei in der Konfigurationseinrichtung (300) applikations- und/oder ortsbasierte Konfigurationsdaten und/oder Verhaltensbeschreibungsdaten speicherbar sind, wobei die Konfigurationseinrichtng (300) ausgebildet ist, gespeicherte Daten an eine einer angeschlossenen intelligenten Einheit (100) zugeordnete Logik (190) zum Verarbeiten der Daten zur Konfiguration und/oder Parametrierung dieser intelligenten Einheit zur deren Anpassung zu übertragen, **dadurch gekennzeichnet, dass** die Konfigurationseinrichtung (300) fest oder lösbar mit der Spannungsversorgungseinrichtung (200, 250) verbindbar ist und zur Datenübertragung über die Spannungsversorgungseinrichtung (200, 250) ausgebildet ist.

4. Vorrichtung für eine Anordnung nach Anspruch 1 oder für eine Vorrichtung nach einem der Ansprüche 2 bis 3, umfassend
eine Spannungsversorgungseinrichtung (200, 250), an welche wenigstens eine intelligente Einrichtung (100) mit einem Spannungsversorgungsanschluss (150) zum Betreiben anschließbar und wenigstens eine Konfigurationseinrichtung (300) fest oder lösbar verbindbar ist, derart, dass nach Anschließen der intelligenten Einheit (100) und bei mit der Spannungsversorgungseinrichtung (200, 250) verbundener Konfigurationseinrichtung (300) eine Datenübertragung zwischen der Konfigurationseinrichtung (300) und der intelligenten Einheit (100) über die Spannungsversorgungseinrichtung (200, 250) erfolgen kann.

5. Vorrichtung nach einem der Ansprüche 2 bis 4, wobei die Spannungsversorgungseinrichtung einen Spannungsversorgungsverbinder (200) und die intelligente Einheit (100) einen mit dem Spannungsversorgungsverbinder (200) koppelbaren Spannungsversorgungsanschluss (150) umfasst, wobei die Datenübertragung über den Spannungsversorgungsverbinder (200) und den Spannungsversorgungsanschluss (150) erfolgt.

6. Vorrichtung nach vorstehendem Anspruch, wobei die Konfigurationseinrichtung (300) am oder im Spannungsversorgungsverbinder (200) angeordnet ist.

7. Vorrichtung nach vorstehendem Anspruch, wobei der Spannungsversorgungsverbinder (200) und der Spannungsversorgungsanschluss (150) zum Herstellen einer Schraub-, Steck-, optischen und/oder Funkverbindung ausgebildet sind.

8. Vorrichtung nach einem der drei vorstehenden Ansprüche, wobei die Datenübertragung über einen zur Spannungsversorgung zwischen dem Spannungsversorgungsverbinder (200) und dem Spannungsversorgungsanschluss (150)aufgebauten Spannungsversorgungskanal erfolgt.

9. Vorrichtung nach einem der Ansprüche 2 bis 7, ferner **dadurch gekennzeichnet, dass** die Konfigurationseinrichtung (300) Mittel zum Einbetten von zu übertragenden Daten in ein Spannungsversorgungssignal umfasst und, dass die intelligente Einheit (100) und/oder die Logik (190) Mittel zum Auslesen von in ein Spannungsversorgungssignal eingebetteten Daten umfasst.

10. Vorrichtung nach einem der vorstehenden Ansprüche 2 bis 8, ferner **dadurch gekennzeichnet, dass** mit der Logik (190) Mittel zur Rückübertragung von Daten über einen Spannungsversorgungskanal verbunden sind und, dass die Konfigurationseinrichtung (300) Mittel zum Auslesen von rückübertragenen Daten umfasst.

11. Vorrichtung nach einem der vorstehenden Ansprüche 2 bis 9, ferner **gekennzeichnet durch** Mittel zur Durchführung eines Datenabgleichs zwischen der Logik (190) und der Konfigurationseinrichtung (300).

12. Vorrichtung nach einem der vorstehenden Ansprüche 2 bis 10, ferner **dadurch gekennzeichnet**, das die intelligente Einheit (100) innerhalb eines Netzwerkes eingebunden ist.

13. Vorrichtung nach einem der vorstehenden Ansprüche 2 bis 11, ferner **gekennzeichnet durch** Mittel für eine gesicherte Übertragung von Daten zwischen der Konfigurationseinrichtung (300) und der Logik (190).

14. Vorrichtung nach einem der Ansprüche 2 bis 12, ferner **gekennzeichnet dadurch, dass** die Spannungsversorgungseinrichtung (200, 250) und der Spannungsversorgungsanschluss (150) der intelligenten Einheit (100) komplementär ausgebildete Mittel zum Bereitstellen einer unidirektionalen und/oder bidirektionalen Datenübertragungsverbindung zwischen der Konfigurationseinrichtung und der intelligenten Einheit über die Spannungsversorgung umfassen.

15. Vorrichtung nach Anspruch 12 oder 13, ferner **gekennzeichnet dadurch, dass** die Mittel eine schraub- und/oder steckbare Verbindung, eine optische und/oder eine Funkverbindung bereitstellen.

16. Vorrichtung nach einem der Ansprüche 2 bis 11, wobei die Logik (190) Teil der intelligenten Einheit (100) oder einer weiteren, mit der intelligenten Einheit in Verbindung stehenden Einheit, insbesondere einer Steuereinheit ist.

## Claims

1. An arrangement for adapting at least one smart unit (100) to an application and/or an installation location of the smart unit within an automation system, the arrangement comprising a power supply device (200, 250) to which at least one smart unit (100) is connectable for operating the smart unit (100) for a particular application and/or a specific installation location within the system, and which comprises a configuration device (300) associated with said application and/or installation location of the at least one smart unit (100) that is connectable, wherein the configuration device (300) stores application-based and/or location-based configuration data and/or behavior description data which, once the smart unit (100) has been connected, are to be transferred from the configuration device to a logic unit (190) for processing the data for configuring and/or parameterizing the smart unit for adaptation thereof,
**characterized in that**
the configuration device (300) is permanently or detachably connected to the power supply device (200, 250) and that the data transfer between the configuration device and the logic unit (190) is effected via said power supply device (200, 250), wherein the data to be transferred from the configuration device (300) to the logic unit (190) include a device number, address and/or device identifier provided for the smart unit (100), and/or application-specific data for describing the expected behavior and/or the function of the smart unit (100).

2. A device for an arrangement according to the preceding claim, comprising
a smart unit (100) with associated logic unit (190) for processing data for configuring and/or parameterizing the smart unit, the smart unit having a power supply port (150) for being connected to a power supply device (200, 250); and
wherein the smart unit (100) is adapted to receive data from a configuration device (300) for storing application-based and/or location-based configuration data and/or behavior description data and to pass or forward them to the logic unit (190) for adapting the smart unit to the application and/or to the installation location;
**characterized in that**
the smart unit (100) and/or the logic unit (190) comprises means for reading out data that has been received via the power supply port (150);
said received data comprising a device number, address and/or device identifier provided for the smart unit (100), and/or application-specific data for describing the expected behavior and/or function of the smart unit (100) .

3. The device for an arrangement according to claim 1 or for a device according to claim 2, comprising a configuration device (300) associated with the application and/or the installation location of at least one smart unit (100) that is connectable to a power supply device (200, 250) within a system, wherein the configuration device (300) is able to store application-based and/or location-based configuration data and/or behavior description data;
wherein the configuration device (300) is adapted to transfer stored data to a logic unit (190) associated with a connected smart unit (100) for processing the data for configuring and/or parameterizing the smart unit for adaptation thereof;
**characterized in that** the configuration device (300) is permanently or detachably connectable to the power supply device (200, 250) and is adapted for data transfer via the power supply device (200, 250).

4. A device for an arrangement according to claim 1 or for a device according to any one of claims 2 to 3, comprising
a power supply device (200, 250) to which at least one smart device (100) having a power supply port (150) is connectable for being operated, and at least one configuration device (300) is connectable permanently or detachably, such that once the smart unit (100) has been connected and when the configuration device (300) is connected to the power supply device (200, 250), data transfer can be effected between the configuration device (300) and the smart unit (100) via the power supply device (200, 250).

5. The device according to any one of claims 2 to 4,
wherein the power supply device comprises a power supply connector (200) and the smart unit (100) comprises a power supply port (150) that can be connected to the power supply connector, wherein said data transfer is effected via the power supply connector (200) and the power supply port (150).

6. The device according to the preceding claim, wherein the configuration device (300) is arranged on or in the power supply connector (200).

7. The device according to the preceding claim, wherein the power supply connector (200) and the power supply port (150) are adapted for establishing a screwed, plug-in, optical, and/or wireless connection.

8. The device according to any one of the three preceding claims, wherein the data transfer is effected via a power supply channel established between the power supply connector (200) and the power supply port (150).

9. The device according to any one of claims 2 to 7, further **characterized in that** the configuration device (300) comprises means for embedding data to be transferred into a power supply signal, and that the smart unit (100) and/or the logic unit (190) comprises means for reading out data embedded in a power supply signal.

10. The device according to any one of the preceding claims 2 to 8, further **characterized in that** the logic unit (190) has means connected thereto for returning data via a power supply channel, and that the configuration device (300) comprises means for reading out returned data.

11. The device according to any one of the preceding claims 2 to 9, further **characterized by** means for performing data matching between the logic unit (190) and the configuration device (300).

12. The device according to any one of the preceding claims 2 to 10, further **characterized in that** the smart unit (100) is integrated within a network.

13. The device according to any one of the preceding claims 2 to 11, further **characterized by** means for a reliable transfer of data between the configuration device (300) and the logic unit (190).

14. The device according to any one of claims 2 to 12, further **characterized in that** the power supply device (200, 250) and the power supply port (150) of the smart unit (100) comprise complementary configured means for establishing a unidirectional and/or bidirectional data transfer connection between the configuration device and the smart unit via the power supply.

15. The device according to claim 12 or 13, further **characterized in that** said means provide a screwed and/or plug-in connection, an optical connection, and/or a wireless connection.

16. The device according to any one of claims 2 to 11, wherein the logic unit (190) is part of the smart unit (100) or of a further unit that is in communication with the smart unit, in particular a control unit.

## Revendications

1. Agencement pour l'adaptation d'au moins une unité intelligente (100) à une application et/ou à un site de montage de l'unité intelligente à l'intérieur d'une installation d'automatisation, l'ensemble comportant un dispositif d'alimentation en tension (200, 250), auquel au moins un dispositif intelligent (100) doit être raccordé pour faire fonctionner l'unité intelligente (100) pour une application définie et/ou un site de montage défini à l'intérieur de l'installation, et un dispositif de configuration (300), lequel est associé à cette application et/ou à ce site de montage de l'au moins une unité intelligente (100) à raccorder, dans lequel des données de configuration basées sur l'application et/ou le site et/ou des données de description du comportement sont mises en mémoire dans le dispositif de configuration (300), et, après raccordement de l'unité intelligente (100), doivent être transmises par le dispositif de configuration à une logique (190) pour le traitement des données aux fins de configuration et/ou de paramétrage de cette unité intelligente pour l'adaptation de celle-ci,
**caractérisé en ce que** :
le dispositif de configuration (300) est relié de manière fixe ou amovible au dispositif d'alimentation en tension (200, 250) et la transmission de données est réalisée entre le dispositif de configuration et la logique (190) par l'intermédiaire du dispositif d'alimentation en tension (200, 250), où les données devant être transmises par le dispositif de configuration (300) à la logique (190) comportent un numéro d'appareil, une adresse et/ou un code d'appareil et/ou des données spécifiques à l'application, prévus pour l'unité intelligente, pour la description du comportement attendu et/ou de la fonction de l'unité intelligente (100).

2. Dispositif pour un agencement selon la revendication précédente, comprenant :
une unité intelligente (100) présentant une logique (190) associée pour le traitement de données aux fins de configuration et/ou de paramétrage de l'unité intelligente, le dispositif intelligent comportant un raccord d'alimentation en tension (150) pour le raccordement à un dispositif d'alimentation en tension (200, 250), et
dans lequel l'unité intelligente (100) est conçue pour recevoir des données d'un dispositif de configuration (300) pour la mise en mémoire de données de configuration basées sur l'application et/ou le site et/ou de données de description de comportement et pour les transférer ou les faire passer à la logique (190) pour l'adaptation de l'unité intelligente à l'application et/ou au site de montage,
**caractérisé en ce que** :
l'unité intelligente (100) et/ou la logique (190) comportent des moyens pour la lecture de données reçues par l'intermédiaire du raccord d'alimentation en tension (150),
dans lequel les données reçues comportent un numéro d'appareil, une adresse et/ou un code d'appareil et/ou des données spécifiques à l'application, prévus pour l'unité intelligente (100), pour la description du comportement attendu et/ou de la fonction de l'unité intelligente (100)

3. Dispositif pour un agencement selon la revendication 1 ou pour un dispositif selon la revendication 2, comprenant un dispositif de configuration (300), lequel est associé à l'application et/ou au site de montage d'au moins une unité intelligente (100) à raccorder à un dispositif d'alimentation en tension (200, 250) à l'intérieur d'une installation, dans lequel des données de configuration basées sur l'application et/ou le site et/ou des données de description de comportement peuvent être mises en mémoire dans le dispositif de configuration (300), dans lequel le dispositif de configuration (300) est conçu pour transmettre les données mises en mémoire à une logique (190) associée à une unité intelligente (100) raccordée pour le traitement des données aux fins de configuration et/ou de paramétrage de cette unité intelligente pour l'adaptation de celle-ci, **caractérisé en ce que** le dispositif de configuration (300) peut être relié de manière fixe ou amovible au dispositif d'alimentation en tension (200, 250) et est conçu pour la transmission des données par l'intermédiaire du dispositif d'alimentation en tension (200, 250).

4. Dispositif pour un agencement selon la revendication 1 ou pour un dispositif selon l'une quelconque des revendications 2 et 3, comportant :
un dispositif d'alimentation en tension (200, 250), auquel au moins un dispositif intelligent (100) peut être raccordé au moyen d'un raccord d'alimentation en tension (150) pour le fonctionnement et au moins un dispositif de configuration (300) peut être relié de manière fixe ou amovible, de telle manière que, après le raccordement de l'unité intelligente (100) et lorsque le dispositif de configuration (300) est relié au dispositif d'alimentation en tension (200, 250), une transmission de données entre le dispositif de configuration (300) et l'unité intelligente (100) peut être réalisée par l'intermédiaire du dispositif d'alimentation en tension (200, 250).

5. Dispositif selon l'une des revendications 2 à 4, dans lequel le dispositif d'alimentation en tension comporte un connecteur d'alimentation en tension (200) et l'unité intelligente (100) comporte un raccord d'alimentation en tension (150) pouvant être couplé au connecteur d'alimentation en tension (200), dans lequel la transmission de données est réalisée par l'intermédiaire du connecteur d'alimentation en tension (200) et du raccord d'alimentation en tension (150).

6. Dispositif selon la revendication précédente, dans lequel le dispositif de configuration (300) est agencé sur ou dans le connecteur d'alimentation en tension (200).

7. Dispositif selon la revendication précédente, dans lequel le connecteur d'alimentation en tension (200) et le raccord d'alimentation en tension (150) sont conçus pour établir une liaison vissée, enfichée, optique et/ou radio.

8. Dispositif selon l'une des trois revendications précédentes, dans lequel la transmission de données est réalisée par l'intermédiaire d'un canal d'alimentation en tension conçu pour l'alimentation en tension entre le connecteur d'alimentation en tension (200) et le raccord d'alimentation en tension (150).

9. Dispositif selon l'une des revendications 2 à 7, **caractérisé en outre en ce que** le dispositif de configuration (300) comporte des moyens pour l'intégration de données à transmettre dans un signal d'alimentation en tension, et **en ce que** l'unité intelligente (100) et/ou la logique (190) comporte des moyens pour la lecture de données incorporées dans un signal d'alimentation en tension.

10. Dispositif selon l'une des revendications précédentes 2 à 8, **caractérisé en ce que** des moyens pour la retransmission de données sont reliés à la logique (190) par l'intermédiaire d'un canal d'alimentation en tension, et **en ce que** le dispositif de configuration (300) comporte des moyens pour la lecture de données retransmises.

11. Dispositif selon l'une des revendications précédentes 2 à 9, **caractérisé en outre par** des moyens pour la mise en oeuvre d'une comparaison de données entre la logique (190) et le dispositif de configuration (300).

12. Dispositif selon l'une des revendications précédentes 2 à 10, **caractérisé en outre en ce que** l'unité intelligente (100) est intégrée à l'intérieur d'un réseau.

13. Dispositif selon l'une des revendications précédentes 2 à 11, **caractérisé en outre par** des moyens pour une transmission sécurisée de données entre le dispositif de configuration (300) et la logique (190).

14. Dispositif selon l'une des revendications 2 à 12, **caractérisé en outre en ce que** le dispositif d'alimentation en tension (200, 250) et le raccord d'alimentation en tension (150) de l'unité intelligente (100) comportent des moyens conçus de manière complémentaires pour fournir une liaison de transmission de données unidirectionnelle et/ou bidirectionnelle entre le dispositif de configuration et l'unité intelligente par l'intermédiaire de l'alimentation en tension.

15. Dispositif selon la revendication 12 ou 13, **caractérisé en outre en ce que** les moyens fournissent une liaison pouvant être vissée et/ou enfichée, une liaison optique et/ou radio.

16. Dispositif selon l'une des revendications 2 à 11, dans lequel la logique (190) fait partie de l'unité intelligente (100) ou d'une autre unité reliée à l'unité intelligente, en particulier une unité de commande.
